Europäisches Patentamt

European Patent Office

Office européen des brevets

(19)

(11) Numéro de publication : **0 478 435 A1**

## (12) DEMANDE DE BREVET EUROPEEN

(21) Numéro de dépôt : **91402528.3**

(22) Date de dépôt : **24.09.91**

(51) Int. Cl.$^5$ : **F02B 27/02**

(30) Priorité : **25.09.90 FR 9011784**

(43) Date de publication de la demande :
**01.04.92 Bulletin 92/14**

(84) Etats contractants désignés :
**DE GB IT**

(71) Demandeur : **REGIE NATIONALE DES USINES RENAULT S.A.**
**34, Quai du Point du Jour**
**F-92109 Boulogne Billancourt (FR)**

(72) Inventeur : **Cochard, Pierre**
**8, rue des Orfèvres**
**F-91170 Saint-Vrain (FR)**

(54) **Dispositif d'admission pour moteur à combustion interne.**

(57) Moteur à combustion interne multicylindrigue, notamment pour véhicule automobile, comportant un circuit (8,9) aux caractéristiques ajustables d'alimentation des chambres de combustion (16) en air comburant caractérisé en ce que le dit circuit (8,9) coopère avec des moyens de distribution (10,4) agissant en réponse aux caractéristiques du dit circuit (8,9).

FIG.1

EP 0 478 435 A1

La présente invention se rapporte aux moteurs à combustion interne équipant notamment les véhicules automobiles et elle concerne en particulier la configuration des dispositifs d'admission utilisés pour être montés sur de tels moteurs.

Des expériences exécutées dans le passé ont permis d'établir que pour un moteur à combustion interne, si on désire porter au maximum la puissance développée par le moteur, il est nécessaire de réduire à un minimum la longueur des conduit d'admission, afin de limiter à un minimum les pertes de charge liées à l'admission du mélange dans les chambres de combustion de moteur. La réduction de la longueur du trajet d'admission du mélange permet en effet d'obtenir un meilleur remplissage des chambres de combustion aux régimes élévés.

Par contre, si l'on veut privilégier le couple maximum qu'on peut obtenir aux bas régimes de rotation, il est préférable d'utiliser des conduit d'admission de grande longueur qui en faisant apparaître des phénomènes de résonnance dans leur volume intérieur, favorisent le remplissage à bas régime.

Il a déjà été proposé antérieurement pour cette raison d'utiliser des collecteurs d'admission possédant une longueur qui varie en fonction des régimes de rotation.

Il est également connu que, dans les moteurs à combustion interne, les phases d'admission et d'échappement qui en principe devraient uniquement occuper le temps utilisé par le piston à effectuer les courses correspondantes sont habituellement augmentées de sorte que chaque soupape s'ouvre avant le point mort du piston et se ferme après le point mort opposé, ainsi on donne aux phases d'admission et d'échappement une avance et un retard, choisis de manière à réduire les pertes de remplissage dues à la résistance au passage des gaz à travers les conduits d'admission.

Il en résulte qu'un moteur doit avoir une distribution d'autant plus étendue (c'est-à-dire avec des avances et des retards élévés) que son régime de fonctionnement est plus élevé tandis que la distribution ou le calage de la distribution doit être plus étroite si on veut avoir une bonne puissance aux faibles régimes.

Etant donné que le moteur, surtout s'il est utilisé sur des véhicules automobiles est employé pour un domaine de régimes assez étendu, la distribution ou le calage de distribution adopté est un compromis.

De nombreux mécanismes ont été développés pour adapter la distribution aux fonctionnement du moteur. On peut citer les cames rotatives à profil variable portées par un arbre coulissant le long de son axe, ou bien encore deux cames portées respectivement par deux arbres à cames parallèles, l'utilisation selective d'une des cames s'effectuant par embrayage d'un des deux arbres ou par basculement d'un support des deux arbres.

La présente invention vise à améliorer sensiblement le remplissage des chambres de combustion d'un moteur à combustion interne, en combinant dans un même dispositif une admission variable et une distribution variable.

Conformément à l'invention, le moteur à combustion interne multicylindrique, notamment pour véhicule automobile, comporte un circuit aux caractéristiques ajustables d'alimentation des chambres de combustion en air comburant.

Selon l'invention le moteur est caractérisé en ce que le dit circuit copère avec des moyens de distribution agissant en réponse aux caractéristiques du circuit.

Selon une autre caractéristique, chacune des chambres de combustion est alimentée par une pluralité de trajets d'écoulement d'air comburant de dimensions différentes associées à un sélecteur de trajets et à chaque trajet d'écoulement selectionné correspond un moyen de distribution particulier.

Selon une autre caractéristique, chacune des chambres de combustion est munie d'au moins deux conduites d'alimentation de longueurs différentes qui débouchent conjointement dans la pipe d'admission définissant différents trajets d'écoulement, et d'au moins un volet selecteur de trajet manoeuvrable en fonction de l'état de marche du moteur.

Selon une autre caractéristique, les dits moyens de distribution sont réalisés par au moins une soupape commandée par au moins un arbre à cames obturant le ou les orifices de sortie de la pipe d'admission dans la chambre de combustion et par au moins un clapet à dépression disposé dans la conduite de plus grande longueur le plus près possible de la pipe d'admission.

Selon une autre caractéristique, la loi de levée de la ou desdites soupapes est adaptée pour un fonctionnement du moteur à haut régime.

Selon une autre caractéristique, le volet selecteur de trajet est disposé au voisinage de la jonction des deux conduites et en ce que le volet obture l'une ou l'autre des dites conduites en fonction de l'état de marche du moteur.

Selon une variante de réalisation, le volet selecteur de trajet est disposé dans la conduite de plus petite longueur.

D'autres caractéristiques et avantages de l'invention seront mieux compris à la lecture de la description qui va suivre d'un exemple de réalisation et en se référant au dessin annexé sur lequel :

La figure 1 est une vue en coupe transversale d'un moteur équipé d'un dispositif d'admission conformément à l'invention

La figure 2 est une vue du moteur prise selon la direction indiquée par la flèche II de la figure 1 ;

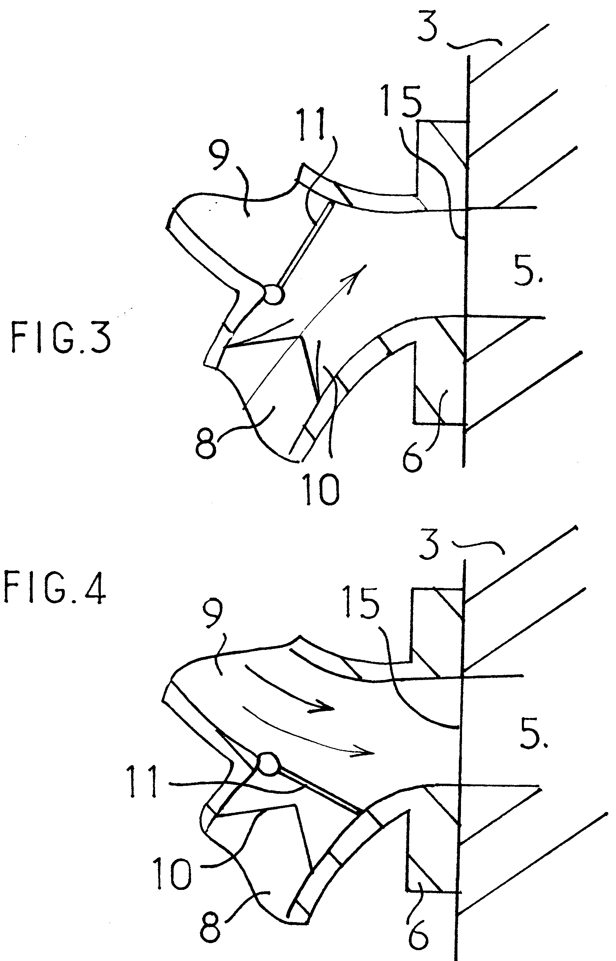

Les figures 3 et 4 sont des vues partielles en coupe du dispositif d'admission précisant sont son fonctionnement ;

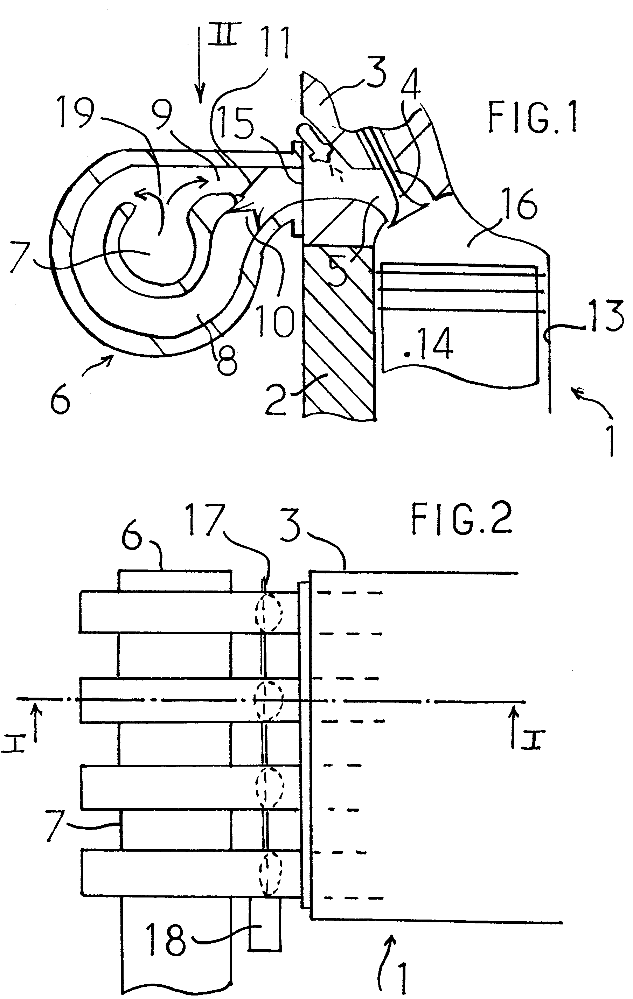

Les figures 1 et 2 représentent un moteur à combustion interne (1) à pistons (14) dont seuls ont été figurés les éléments intéressant l'invention.

Le moteur à combustion (1) comprend schématiquement en tant que parties essentielles, le bloc cylindres (2) et la culasse (3). La culasse (3) définit les parois de tête d'un groupe de chambres de combustion (16). Ce groupe comprend dans l'exemple illustré quatre chambres de combustion alignées.

La culasse (3) est traversée par des pipes d'admission (5) par lesquelles le mélange combustible est introduit à l'intérieur des chambres de combustion (16). Chaque pipe d'admission (5) débouche dans la chambre de combustion (16) par un siège obturable par une soupape d'admission (4). Dans l'exemple décrit l'alimentation en carburant a lieu par injection multipoint : une unité d'injection de carburant (12) débouche dans chaque pipe d'admission.

Les orifices d'entrée (15) des pipes d'admission sont reliés à un collecteur d'admission indiqué dans son ensemble par (16).

Le collecteur (6) comprend un répartiteur (7) de forme cylindrique qui s'étend parallélement aux cylindres (13) et des groupes de tubulures rejoignant les pipes d'admission (15).

Chaque groupe est associé à une pipe d'admission (5) et comprend deux tubulures d'embranchement spécifiques (8) et (9).

Les deux conduites (8) et (9) s'étendent, depuis un orifice commun disposé dans la partie haute du répartiteur (7), dans un plan perpendiculaire à l'axe longitudinal du répartiteur.

La conduite (9) destinée à l'alimentation à hauts régimes est sensiblement droite, courte et de forte section. La conduite (8) destinée elle à l'alimentation à bas régime contourne le répartiteur (7) avant de rejoindre la conduite (9). Cette conduite (8) est donc sensiblement plus longue que la conduite (9) elle est également de moindre section.

Les conduites d'embranchement (8) et (9) se rejoignent sensiblement au droit de l'orifice d'entrée de la pipe d'admission (5) associée.

Au voisinage de la zone de jonction des deux conduites est disposé un volet (11) solidaire d'un axe tournant (17). Le volet (1) occupe deux positions limites : une première où il obture le conduit (9) et où le conduit (8) est parfaitement libre et une seconde où il obture le conduit (8) et où le conduit (9) est parfaitement libre. L'axe (17) s'étend parallèlement au répartiteur (7) et commande ainsi simultanément chaque volet (11) associé à chaque groupe de conduites d'embranchement (8,9). L'axe (17) est actionné par un moteur (18) asservi mécaniquement ou électriquement au fonctionnement du moteur.

Un clapet anti retour (10) est disposé dans la conduite (8) le plus près possible de l'orifice d'entrée (15) de la pipe d'admission. Le clapet sera donc positionné au voisinage de l'extrémité de la conduite (8).

Ce clapet à dépression (10) est réalisé par une ou plusieurs lames flexibles articulée sur un bord du conduit (8).

Conformément à l'ensemble des figures le fonctionnement du dispositif est le suivant :

A bas régime le servo moteur (18) actionne l'axe (17) de sorte que les volets (11) obturent les conduites d'admission (9). Les gaz carburants s'écoulent depuis le répartiteur (7) vers les chambres de combustion à travers les conduites longues (8) dont l'accoustique est adaptée au remplissage des chambres à un tel régime. La présence du clapet anti retour (10) dans le circuit d'admission représente une perte de charge négligeable. Le clapet (10) a pour fonction de contrôler l'écoulement : quand la pression dans la pipe d'admission (5) en aval du clapet (10) devient inférieure à la pression en amont de ce même clapet (10) dans la conduite (8), la lame du clapet s'écarte et laisse passer l'air comburant vers les cylindres. Quand la pression dans la pipe d'admission en aval du clapet devient supérieure à la pression en amont du clapet, la lame se plaque contre la paroi de la conduite (8) et empêchent le mélange carburé d'être refoulé dans le circuit d'admission et cela indépendament de la loi de levée de la soupape (4) et de la valeur du RFA (retard fermeture admission) induite.

On dispose donc pour les faibles régimes d'une distribution avec un RFA réel quasi nul qui est particulièrement adaptée pour de tels régimes.

A haut régimes l'axe (17) effectue une rotation angulaire de manière à ce que les volets (1) obturent les conduites (8), l'écoulement s'effectue alors que la conduite (9) particulièrement adaptée à un fonctionnement à haut régimes, les pertes de charge étant réduites au minimum.

La distribution est commandée par la soupape (4) dont la loi de levée est adaptée aux hauts régimes.

Le pilotage du moteur (18) de l'arbre de commande (17) des clapets (11) s'effectue mécaniquement ou électriquement à partir d'un paramètre au moins de marche du moteur par exemple l'angle d'ouverture du papillon des gaz ou bien encore à partir du calculateur d'injection...

Il est évident que l'invention n'est pas limitée à la réalisation décrite et qu'on peut y apporter des variantes d'exécution.

Ainsi le volet selecteur (1) peut être disposé dans la conduite (9) sans interaction sur la conduite (8). Cette disposition définit deux trajets d'écoulement : la conduite (8) à bas régime et les conduites (8) et (9) à haut régime.

Ainsi la pipe d'admission (5) peut déboucher dans la chambre de combustion (16) par plusieurs sièges obturés par plusieurs soupapes lesquelles peuvent être commandées par un ou plusieurs arbres à cames.

## Revendications

**[1]** Moteur à combustion interne multicylindrique, notamment pour véhicule automobile, comportant un circuit (8,9) d'alimentation des chambres de combustion (16) en air comburant à acoustique variable, ledit circuit (8,9) coopérant avec des moyens de distribution (10,4) agissant en réponse aux caractéristiques du dit circuit (8,9) caractérisé d'une part en ce que chacune des chambres de combustion (16) est alimentée par deux conduites d'alimentation de longueurs différentes (8,9) qui débouchent conjointement dans la pipe d'admission (5), lesdites conduites coopérant avec un volet sélecteur de trajets (11) manoeuvrable en fonction du régime moteur et en ce que d'autre part, lesdits moyens de distribution sont constitués par une ou plusieurs soupapes (4) commandée par un ou plusieurs arbres à cames pour obturer le ou les orifices de sortie de la pipe d'admission (5) dans la chambre de combustion (16) et par au moins un clapet à dépression (10) disposé dans la conduite de grande longueur (8) à proximité de la pipe d'admission (5).

**[2]** Moteur à combustion interne suivant la revendication 1, caractérisé en ce que la loi de levée de la dite ou des dites soupapes 4 est adaptée à un fonctionnement du moteur à haut régime.

**[3]** Moteur à combustion interne selon l'une quelconque des revendications 1 à 2, caractérisé en ce que le volet selecteur de trajets (11) est disposé dans la conduite de plus petite longueur (9).

**[4]** Moteur à combustion interne selon l'une quelconque des revendications 1 à 3, caractérisé en ce que le volet selecteur de trajets (11) est disposé au voisinage de la jonction des deux conduites (8,9) et en ce que le volet (11) obture l'une ou l'autre desdites conduites en fonction de l'état de marche du moteur.

**[5]** Moteur à combustion interne selon l'un quelconque des revendications 1 à 4 caractérisé en ce que le volet (11) est situé à proximité de la pipe d'admission (5) et en ce que la pipe d'admission (5) est de dimension réduite de manière à enfermer le minimum de gaz résiduel dans le volume compris entre le volet (11) le clapet (8) à dépression et la ou les soupapes (4).

FIG.1

FIG.2

FIG.3

FIG.4

Office européen
des brevets

# RAPPORT DE RECHERCHE EUROPEENNE

Numero de la demande

EP 91 40 2528

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-A-3 743 056 (VW)(28-07-1988) * Colonne 2, ligne 64 - colonne 4, ligne 33; colonne 2, lignes 38-50; colonne 2, lignes 8-14; colonne 1, lignes 49-63; figure 1 * | 1,5 | F 02 B 27/02 |
| Y | --- | 2-4 | |
| A | REVUE TECHNIQUE AUTOMOBILE, vol. 43, no. 488, 1 février 1988, pages 37-39, Boulogne-Billancourt, FR; Y.D.: "HONDA: un coupé pour affirmer une "légende"" --- | 1 | |
| A | FR-A-2 216 453 (NISSAN)(30-08-1974) * Page 2, lignes 27-34; figure 1 * --- | 1 | |
| Y | REVUE TECHNIQUE AUTOMOBILE, vol. 43, no. 492, 1 juin 1988, page 38, Boulogne-Billancourt, FR --- | 2,5 | |
| Y | FR-A-1 395 660 (TECALEMIT)(16-04-1965) * Page 1, colonne de gauche, ligne 18 - colonne de droite, ligne 2; figure 1 * --- | 3,4 | DOMAINES TECHNIQUES RECHERCHES (Int. Cl.5) |
| A | EP-A-0 268 914 (NICCHIO)(01-06-1988) * Colonne 1, lignes 1-23; figures 1-3; colonne 1, lignes 41-47; colonne 2, ligne 37 - colonne 3, ligne 15; colonne 3, lignes 25-48 * --- | 1-3 | F 02 B |
| A | EP-A-0 201 180 (AUSTIN ROVER)(12-11-1986) * Abrégé; figure 1; page 4, ligne 21 - page 5, ligne 3; page 5, ligne 12 - page 6, ligne 8 * --- -/- | 4 | |

Le présent rapport a été établi pour toutes les revendications

| Lieu de la recherche | Date d'achèvement de la recherche | Examinateur |
|---|---|---|
| LA HAYE | 18-12-1991 | JORIS J.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

EP 0 478 435 A1

Office européen
des brevets

**RAPPORT DE RECHERCHE EUROPEENNE**

Numero de la demande

EP  91 40 2528

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PATENT ABSTRACTS OF JAPAN, vol. 9, no. 252 (M-420)[1975], 9 octobre 1985; & JP-A-60 104 717 (NISSAN) 10-06-1985 * Abrégé * | 1 | |
| A | EP-A-0 387 089  (HONDA)(12-09-1990) * Abrégé; colonne 2, ligne 1 - colonne 3, ligne 2; colonne 3, lignes 22-45 * | 1,3,4 | |
| A | PATENT ABSTRACTS OF JAPAN, vol. 10, no. 171 (M-489)[2227], 17 juin 1986; & JP-A-61 019 926 (HONDA) 28-01-1986 * Abrégé * | 1 | |
| A | EP-A-0 382 596  (PEUGEOT)(16-08-1990) * Abrégé; colonne 3, lignes 14-16; figure 1 * | 3 | |
| A | PATENT ABSTRACTS OF JAPAN, vol. 7, no. 85 (M-206)[1230], 9 avril 1983; & JP-A-58 010 111 (HONDA) 20-01-1983 * Abrégé * | 1,3 | DOMAINES TECHNIQUES RECHERCHES (Int. Cl.5) |
| A | EP-A-0 337 816  (HONDA)(12-10-1989) * Colonne 7, ligne 14 - colonne 8, ligne 13; colonne 8, lignes 35-53; colonne 9, lignes 17-24 * | 1 | |
| A | DE-A-3 624 495  (BMW)(28-01-1988) * Colonne 3, ligne 58 - colonne 4, ligne 11 * | 1,2,5 | |
| A | DE-A-3 502 699  (MAZDA)(14-08-1985) * Page 6, ligne 16 - page 7, ligne 2 * | 1 | |
| A | FR-A-2 492 463  (ALFA ROMEO)(23-04-1982) | | |

Le présent rapport a été établi pour toutes les revendications

| Lieu de la recherche | Date d'achèvement de la recherche | Examinateur |
|---|---|---|
| LA HAYE | 18-12-1991 | JORIS J.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)